# FASCICULE DE BREVET EUROPEEN

(11) **EP 3 903 923 B1**
(45) Date de publication et mention de la délivrance du brevet: **28.09.2022**
(21) Numéro de dépôt: 21168486.5
(22) Date de dépôt: 15.04.2021
(51) Int. Cl.: B01J 8/00

(54) **PROCÉDÉ DE VIDANGE COMPLÈTE D'UN RÉACTEUR CATALYTIQUE AU MOYEN D'UN BRAS ARTICULÉ MUNI DE PROTUBÉRANCES SPIRALAIRES ROTATIVES**
VERFAHREN ZUR VOLLSTÄNDIGEN ENTLEERUNG EINES KATALYTISCHEN REAKTORS MITHILFE EINES GELENKARMS, DER MIT ROTIERENDEN SPIRALFÖRMIGEN FORTSÄTZEN VERSEHEN IST
METHOD FOR COMPLETE DRAINING OF A CATALYTIC REACTOR BY MEANS OF AN ARTICULATED ARM PROVIDED WITH ROTARY SPIRAL PROTRUSIONS

(30) Priorité: 30.04.2020 FR 2004297
(43) Date de publication de la demande: 03.11.2021
(73) Titulaire: Eurecat S.A., 07800 La Voulte-sur-Rhône (FR)
(72) Inventeur: THEVENET, Vincent, 26400 ALLEX (FR)
(74) Mandataire: Casalonga

(56) Documents cités:
- EP-A1- 3 108 958
- EP-A1- 3 108 959
- JP-A- 2013 226 520

## Description

La présente invention concerne un procédé qui permet de vidanger de manière complète un réacteur contenant des particules de catalyseur usé.

Le procédé selon l'invention est tout particulièrement approprié pour vider complètement un réacteur industriel des particules de catalyseur usé qu'il contient.

### ETAT DE L'ART ANTERIEUR

De nombreux procédés industriels notamment dans les domaines de la chimie, de la pétrochimie et du raffinage pétrolier, mettent en œuvre des catalyseurs solides sous forme de particules de petite taille.

Ces particules de catalyseur sont en général disposées dans le réacteur sous forme d'un ou plusieurs lits (ou couches de catalyseurs) superposés, déposés chacun sur un plateau de support.

Au cours de son utilisation dans le réacteur, le catalyseur se désactive progressivement, et son activité diminue, de telle sorte qu'il doit être retiré du réacteur pour être remplacé par un nouveau catalyseur actif. Ainsi, les réacteurs industriels doivent être régulièrement arrêtés pour renouveler le ou les lits de catalyseur. Cette opération se déroule en deux temps : la vidange du réacteur de manière à en retirer le catalyseur usé, puis son rechargement en catalyseur actif. Ces deux opérations doivent être réalisées de manière la plus efficace et rapide possible, de manière à diminuer au maximum le temps d'arrêt du réacteur, pour des raisons économiques évidentes.

En outre, l'opération de vidange doit être complète, pour éliminer entièrement du réacteur l'intégralité du catalyseur usé. En effet, une vidange incomplète conduirait à laisser subsister du catalyseur usé dans le réacteur, au détriment du catalyseur actif, ce qui serait particulièrement préjudiciable au rendement de l'unité et n'est en pratique pas acceptable.

Toutefois, la vidange complète d'un réacteur industriel des particules de catalyseur usé qu'il contient est une opération délicate et problématique, pour diverses raisons.

En premier lieu, les particules de catalyseur usé sont collantes et ont tendance à s'agglomérer de manière plus ou moins forte les unes aux autres et les agglomérats à se coller aux parois du réacteur, ce qui complique substantiellement leur évacuation hors du réacteur.

En second lieu, le catalyseur usé contient souvent une phase active qui peut être réactive au contact de l'air, telles que par exemple les phases actives contenant des sulfures métalliques. En raison de la présence de ces composés, le catalyseur usé peut s'échauffer spontanément de manière brusque et importante, voire dans certains cas s'auto-enflammer au contact de l'air. La plupart des catalyseurs correspondants sont classifiés, selon une norme des Nations Unies, soit comme auto-échauffants, soit comme pyrophoriques.

La manipulation du catalyseur usé est donc délicate et peut être dangereuse, et la vidange du réacteur est généralement effectuée sous atmosphère inerte (le plus souvent de l'azote).

Pour vider un réacteur contenant des particules de catalyseur usées, plusieurs techniques, décrites ci-après, sont connues dans l'art antérieur.

### La vidange gravitaire :

Celle-ci s'effectue en ouvrant le ou les tubes de vidange latéraux situés en bas du réacteur (ou en bas de chaque lit de catalyseur pour un réacteur à plusieurs lits), de manière à permettre au catalyseur de s'écouler hors du réacteur sous l'action de son poids. Ceci permet dans les cas les plus favorables d'extraire 80 à 85 % du catalyseur usé contenu dans le réacteur.

Mais le catalyseur usé est généralement collant et peut mal s'écouler voire ne pas s'écouler du tout notamment lorsque des agglomérats de catalyseur usé se sont formés. Dans ce cas, il est nécessaire de recourir à différentes techniques de décolmatage du lit pour enclencher l'écoulement des particules de catalyseur.

Dans tous les cas, même les plus favorables, à la fin de l'opération de vidange gravitaire il reste dans le réacteur une quantité de catalyseur usé qui représente en général de 15 à 20 % en poids du lit de catalyseur initial, et qui correspond dans les meilleurs cas à l'angle naturel de talus de ce solide divisé. Ce reliquat de catalyseur dans le réacteur à la fin de la vidange gravitaire d'un catalyseur s'écoulant librement est communément appelé « dig out ». Le volume de catalyseur correspondant au dig out dépend de la géométrie du réacteur et de l'angle naturel de talus des particules de catalyseur. Dans les cas les moins favorables cependant, le reliquat de catalyseur peut former en outre à l'intérieur du réacteur des amas en forme de chandelles, ou des cavités, comme exposé ci-après

Dans tous les cas, une intervention humaine est souvent requise pour évacuer le reliquat de catalyseur : un opérateur descend dans le réacteur et évacue manuellement ce reliquat, par exemple avec une pelle, vers le tube de vidange. Cette opération présente un danger particulièrement important : le réacteur est sous azote, compte tenu du caractère auto-échauffant du catalyseur usé, et régulièrement des accidents mortels surviennent lors de ces opérations. Les industriels souhaitent donc aujourd'hui limiter, voire supprimer complètement, de telles interventions humaines à l'intérieur des réacteurs.

### La vidange par aspiration :

Celle-ci s'effectue en général par le haut du réacteur. Le haut du réacteur est ouvert, sous balayage d'azote, le plateau distributeur de charge généralement présent au-dessus du lit est démonté, et le lit catalytique est aspiré au moyen d'un aspirateur industriel avec compensation d'azote.

La tête de l'aspirateur est généralement guidée par un opérateur pour vidanger le catalyseur couche par couche. Le solide et le gaz sont séparés via un cyclone. Cette technique, largement utilisée, présente divers inconvénients : un coût élevé ; une détérioration des particules de catalyseur, allant parfois jusqu'à ne pas permettre la régénération de celui-ci pour son utilisation ultérieure ; la présence dans le réacteur d'un opérateur, au moins pour les opérations de finition, ce qui engendre des problèmes de sécurité tels que décrits ci-avant.

Des exemples de ce type de technique sont décrits dans les documents US 7,959,870 et WO 2004/058572.

### La vidange gravitaire sous eau :

Cette technique, plutôt expérimentale et moins couramment employée, permet d'éviter toute intervention humaine dans le réacteur sous atmosphère inerte. Elle consiste à remplir le réacteur d'eau et vidanger le mélange catalyseur/eau via les tubes de vidange latéraux situés en bas du réacteur.

Elle présente toutefois des inconvénients majeurs : elle génère beaucoup d'eau sale, et compromet la possibilité de régénérer ensuite le catalyseur usé en vue de sa réutilisation.

Il existe donc depuis longtemps un besoin important de disposer de solutions innovantes qui permettent de vider de manière complète, rapide, efficace et sûre, les réacteurs industriels des particules de catalyseur usé qu'ils contiennent.

Dans la demande EP 3 108 959, la Demanderesse a proposé un procédé de vidange d'un réacteur comprenant un tube de vidange dans sa partie basse. Ce procédé comprend deux étapes : une première étape d'écoulement gravitaire hors du réacteur d'une partie du lit de catalyseur via le tube de vidange, puis une seconde étape d'aspiration des particules de catalyseur restant dans le réacteur à l'issue de la première étape au moyen d'une manche d'aspiration flexible et mobile, pourvue sur sa surface externe de protubérances, introduite dans le réacteur via le tube de vidange.

La demande EP 3 108 958, également au nom de la Demanderesse, décrit un procédé alternatif, dans lequel la seconde étape est effectuée en expulsant le reliquat de catalyseur hors du réacteur à l'aide d'un dispositif amovible comprenant au moins une brosse rotative fixée à l'extrémité d'un bras articulé introduit dans le réacteur via le tube de vidange.

Ces deux procédés, bien que très efficaces, ne sont toutefois pas entièrement satisfaisants, en particulier dans les cas où le catalyseur usé ne s'écoule pas librement lors de la première étape de vidange gravitaire. En effet, dans le cas où les particules de catalyseur usé tendent à coller et à s'agglomérer, le reliquat de catalyseur ne se présente pas sous la forme d'un volume homogène ayant la forme d'un dig out, mais présente des excroissances et/ou des cavités. On observe par exemple la formation de chandelles et/ou de cavernes dans le volume de catalyseur résiduel à l'issue de la première étape, qui peuvent compliquer de manière substantielle la mise en œuvre des technologies décrites ci-avant.

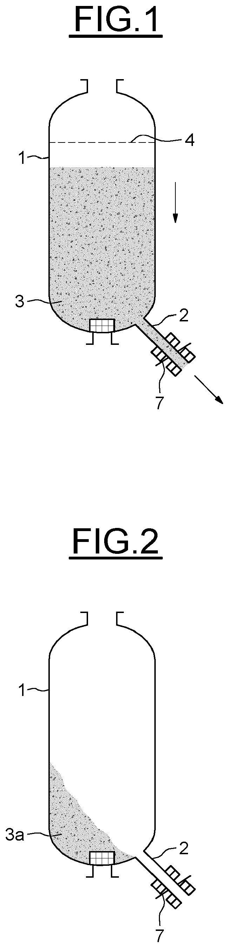

La figure 1 ci-jointe illustre une étape de vidange gravitaire dans un réacteur industriel contenant un lit de particules de catalyseur usé. Les figures 2 à 4 ci-jointes présentent trois configurations du volume de catalyseur résiduel à l'issue de cette étape de vidange gravitaire.

La figure 1 montre un réacteur industriel 1 en forme de colonne, contenant un lit 3 de particules de catalyseur usé. Le réacteur 1 comprend un tube de vidange 2 incliné vers le bas, avec un angle d'inclinaison par rapport à la verticale d'environ 45 degrés. Le tube 2 débouche dans le réacteur 1 en partie basse du lit 3 de particules.

Pour permettre la mise en œuvre de la vidange gravitaire, le tube de vidange 2 a été ouvert en ouvrant la vanne de vidange 7, de telle sorte que les particules de catalyseur s'écoulent hors du réacteur 1 par écoulement gravitaire, via le tube 2.

Les pointillés 4 montrent le niveau supérieur initial du lit de catalyseur 3 avant le déclenchement de l'écoulement gravitaire, et les flèches sur la Figure 1 montrent le sens de l'écoulement du catalyseur.

La figure 2 illustre le réacteur 1 à la fin de cette étape de vidange gravitaire, dans le cas où le catalyseur s'écoule librement. Cette figure montre qu'à l'issue de cette étape il reste dans le réacteur 1 un volume 3a de catalyseur usé qui représente ici environ 15% en poids du lit de catalyseur initial, qui correspond à l'angle naturel de talus de l'amas de particules de catalyseur, et qui ne peut pas être éliminé par simple vidange gravitaire. Le volume de catalyseur résiduel 3a est homogène et correspond au « dig out » de forme classique.

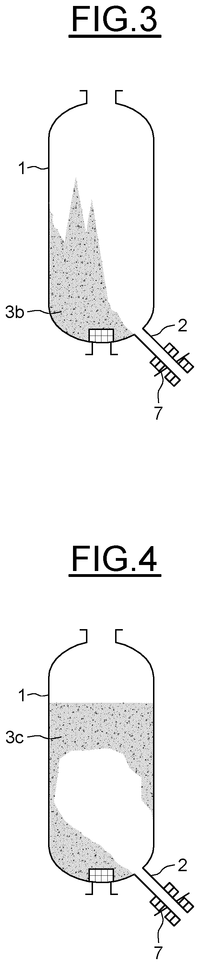

Comme illustré dans la figure 3, lorsque le catalyseur ne s'écoule pas librement par gravité, le volume de catalyseur résiduel 3b peut présenter des excroissances formées par des agglomérats de catalyseur. La figure 3 montre des excroissances en forme de chandelles, qui est une forme typique, mais des excroissances de toutes formes et dimensions peuvent en pratique être observées.

La figure 4 illustre une autre configuration susceptible d'être obtenue également dans le cas où le catalyseur ne s'écoule pas librement par gravité. Sur cette figure, le volume de catalyseur résiduel 3c présente des cavités ou cavernes, qui se forment dans la masse du catalyseur en raison de l'agglomération des particules de catalyseur entre elles et de leur adhésion à la paroi du réacteur.

Les technologies proposées dans l'art antérieur ne permettent pas toujours de traiter de manière satisfaisante les cas où le volume de catalyseur résiduel présente des excroissances et/ou des cavités, tels que ceux illustrés en figures 3 et 4.

En particulier, les dispositifs amovibles tels que ceux proposés dans EP 3 108 958 et EP 3 108 959 ne permettent pas toujours de casser les agglomérats de catalyseur et de venir à bout des excroissances telles que les chandelles.

De plus, lorsque le dispositif amovible permet effectivement de casser des excroissances et/ou d'éliminer des cavités dans la masse du catalyseur, des amas de particules de catalyseur se décrochent et tombent sur le dispositif, et peuvent l'ensevelir en tout ou partie et bloquer ainsi son fonctionnement, voire même l'endommager. Dans ce cas, il devient alors en général nécessaire de recourir à une intervention humaine à l'intérieur du réacteur pour dégager et débloquer dit dispositif, et le réparer le cas échéant.

La Demanderesse a maintenant découvert une nouvelle technique de vidange des réacteurs contenant des particules de catalyseur usé, qui permet de remédier aux inconvénients décrits ci-avant.

La présente invention est donc un perfectionnement des technologies antérieures, qui permet de vidanger de manière très efficace un réacteur de l'intégralité de son chargement de catalyseur usé, y compris dans les cas où les particules de catalyseurs collent et s'agglomèrent.

### OBJET DE L'INVENTION

La présente invention a pour objet un procédé pour vidanger un réacteur contenant au moins un lit de particules de catalyseur usé et qui comprend au moins un tube de vidange, qui débouche dans le réacteur en partie basse dudit lit de particules ou en dessous de celui-ci. Le procédé selon l'invention comprend les étapes successives suivantes :
- une première étape consistant à provoquer l'écoulement hors du réacteur d'une partie du lit de catalyseur via ledit tube de vidange ; puis
- une seconde étape consistant à expulser hors du réacteur le reliquat de catalyseur, en chassant vers l'ouverture du tube de vidange les particules de catalyseur restant dans le réacteur à l'issue de la première étape, cette étape étant effectuée au moyen d'un dispositif amovible introduit dans le réacteur via le tube de vidange.

Ce procédé se caractérise en ce que ledit dispositif amovible comprend un bras articulé portant une ou plusieurs protubérances disposées de manière spiralaire autour d'un axe rotatif.

Le procédé selon l'invention permet de vider de manière particulièrement complète, efficace et rapide le réacteur de son chargement de catalyseur usé, y compris dans les cas où celui-ci s'agglomère.

Le procédé selon l'invention comprend une première étape de vidange similaire à celles décrites dans l'art antérieur, mais présente l'avantage de permettre au cours de sa seconde étape de parvenir à une vidange complète du réacteur quelle que soit la configuration du volume de catalyseur résiduel à l'issue de la première étape, c'est-à-dire que ce volume de catalyseur résiduel soit homogène sous la forme d'un dig out classique (3a), ou non. Le procédé selon l'invention reste totalement efficace y compris dans les cas où le volume de catalyseur résiduel présente des excroissances (3b) et/ou des cavités (3c) telles que décrites ci-avant.

En particulier, le bras articulé portant une ou plusieurs protubérances disposées de manière spiralaire autour d'un axe rotatif (également désignées ci-après par « les protubérances spiralaires rotatives ») permet d'atteindre les zones de catalyseur aggloméré quelles que soient leurs configurations, et de casser ces agglomérats.

Les chutes d'amas de catalyseur sur les protubérances spiralaires rotatives n'empêchent pas celles-ci de continuer leurs mouvements de rotation, et la forme spiralaire des protubérances permet d'évacuer les amas de catalyseur et de dégager la partie rotative. Ainsi, le dispositif selon l'invention peut continuer de fonctionner et d'évacuer les particules de catalyseur y compris lorsqu'il se trouve enseveli dans la masse du catalyseur.

La méthode selon l'invention permet ainsi d'éviter toute intervention humaine à l'intérieur du réacteur, et d'améliorer la sécurité des opérations de déchargement du catalyseur usé.

La méthode selon l'invention permet enfin de préserver les propriétés du catalyseur usé, et de limiter son endommagement lors de son déchargement, ce qui est essentiel lorsque le catalyseur doit ensuite être régénéré en vue d'une utilisation ultérieure.

D'autres objets, caractéristiques, aspects et avantages de l'invention apparaîtront encore plus clairement à la lecture de la description ci-après et en se référant aux figures annexées et décrites ci-après.
[Fig 1]
   La figure 1 illustre une étape de vidange gravitaire dans un réacteur industriel contenant un lit de particules de catalyseur usé, correspondant à la première étape du procédé selon l'invention.
[Fig 2]
   La figure 2 présente une première configuration du volume de catalyseur résiduel à l'issue de l'étape de vidange gravitaire de la figure 1, dans le cas où le catalyseur s'écoule librement (« dig out » de forme classique).
[Fig 3]
   La figure 3 présente une seconde configuration du volume de catalyseur résiduel à l'issue de l'étape de vidange gravitaire de la figure 1, lorsque le catalyseur ne s'écoule pas librement par gravité, et que le volume de catalyseur résiduel présente des excroissances en forme de chandelles.
[Fig 4]
   La figure 4 présente une troisième configuration du volume de catalyseur résiduel à l'issue de l'étape de vidange gravitaire de la figure 1, lorsque le catalyseur ne s'écoule pas librement par gravité, et que le volume de catalyseur résiduel présente des cavités.
[Fig 5]

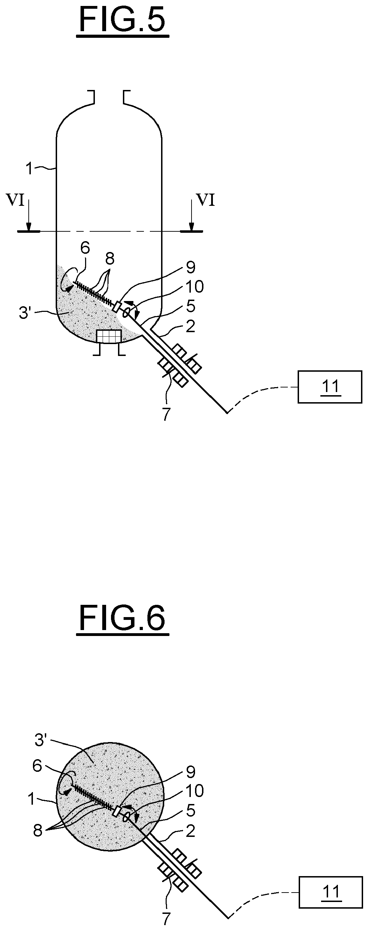

   La figure 5 illustre la mise en œuvre de la seconde étape du procédé selon l'invention.
[Fig 6]
   La figure 6 est une vue en coupe de la figure 5, en section transversale selon le plan de coupe VI.
[Fig 7]

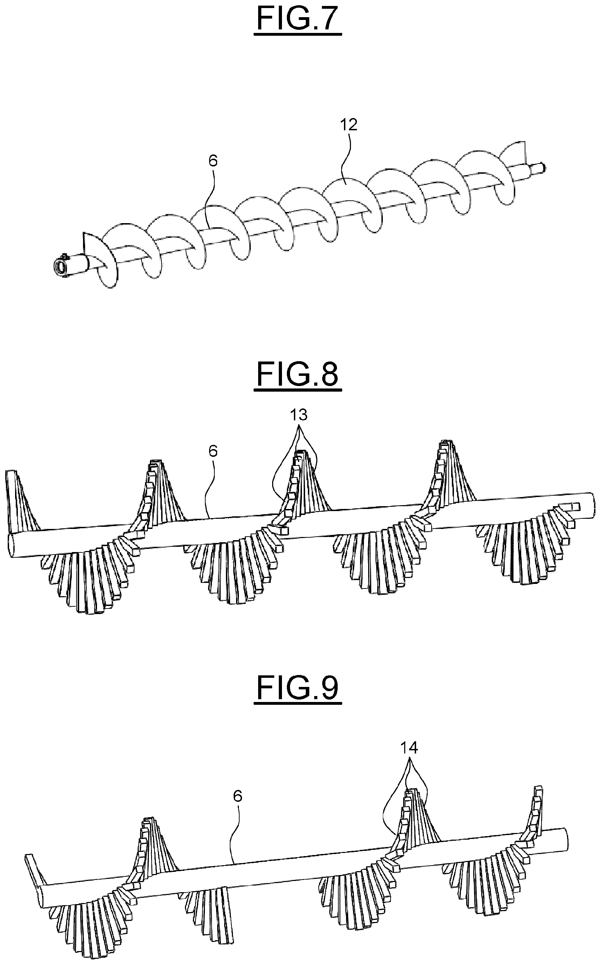

   La figure 7 représente une unique protubérance spiralaire continue s'enroulant autour d'une tige rotative.
[Fig 8]
   La figure 8 représente une pluralité de protubérances spiralaires s'enroulant de manière continue autour d'une tige rotative.
[Fig 9]
   La figure 9 représente une pluralité de protubérances spiralaires s'enroulant de manière discontinue autour d'une tige rotative.
[Fig 10]

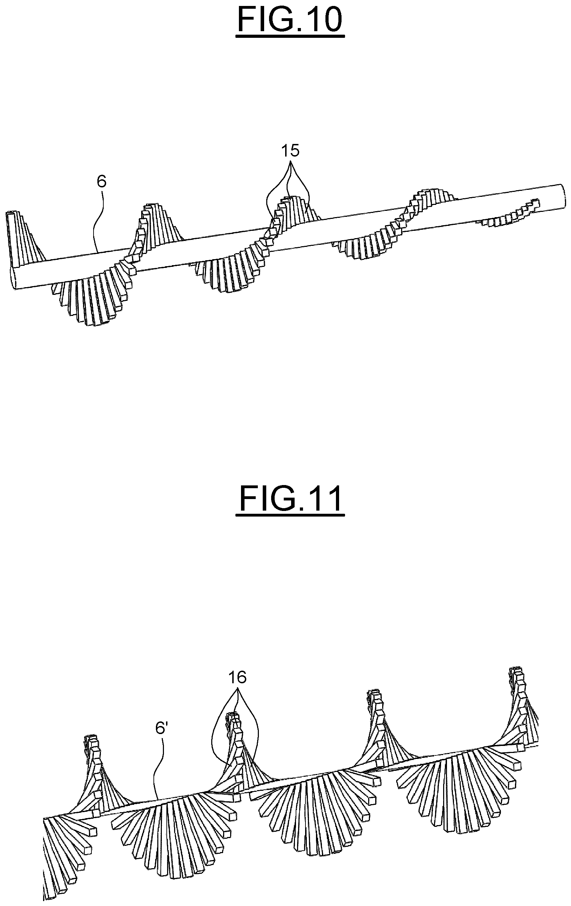

   La figure 10 représente une pluralité de protubérances spiralaires de dimensions variables, s'enroulant de manière continue autour d'une tige rotative.
[Fig 11]
   La figure 11 représente une pluralité de protubérances spiralaires s'enroulant de manière continue autour d'un axe rotatif visible.
[Fig 12]

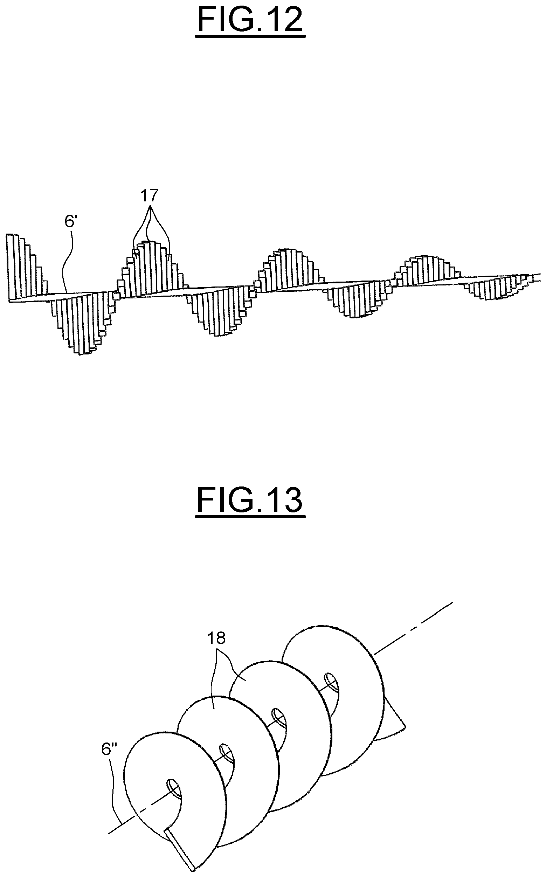

   La figure 12 représente une pluralité de protubérances spiralaires de dimensions variables, s'enroulant de manière continue autour d'un axe rotatif visible.
[Fig 13]
   La figure 13 représente une unique protubérance spiralaire s'enroulant autour d'un axe de rotation qui n'est pas matérialisé.

Dans ce qui va suivre, et à moins d'une autre indication, les bornes d'un domaine de valeurs sont comprises dans ce domaine, notamment dans les expressions « compris entre » et « allant de ... à ...».

Par ailleurs, les expressions « au moins un » et « au moins » utilisées dans la présente description sont respectivement équivalentes aux expressions « un ou plusieurs » et « supérieur ou égal ».

### DESCRIPTION DETAILLEE

La première étape de la méthode selon l'invention consiste à provoquer l'écoulement d'une partie du lit de catalyseur hors du réacteur au travers du tube de vidange, en ouvrant celui-ci.

Cette première étape est de préférence effectuée de manière gravitaire, c'est-à-dire en provoquant l'écoulement gravitaire hors du réacteur d'une partie du lit de catalyseur via ledit tube de vidange.

Par « écoulement gravitaire », on entend que le catalyseur s'écoule du réacteur au cours de la première étape sous l'action de son propre poids, et n'est ni poussé par des moyens mécaniques de poussée à l'intérieur du réacteur (par exemple, par un opérateur), ni aspiré hors du réacteur par des moyens d'aspiration des particules.

Il s'agit typiquement d'un écoulement gravitaire classique, tel que ceux décrits dans l'art antérieur. La première étape est typiquement illustrée sur la Figure 1 telle que décrite ci-avant.

L'écoulement peut également être assisté, c'est-à-dire qu'au cours de la première étape peuvent être mis en œuvre des moyens permettant de faciliter la sortie du catalyseur hors du réacteur, par exemple au moyen d'injection dans le réacteur de gaz sous pression.

Par ailleurs, notamment dans les cas où l'écoulement de catalyseur ne se produit pas spontanément lors de l'ouverture du tube de vidange, l'on peut, immédiatement avant la première étape, recourir à des moyens de désagglomération du lit de catalyseur. De tels moyens sont connus dans l'art antérieur. Il peut d'agir en particulier d'une injection de gaz sous pression (typiquement, du CO2 sous pression). Ces moyens permettent de faire démarrer l'écoulement des particules de catalyseur, après quoi le catalyseur, dans le cas d'un écoulement gravitaire, est laissé s'écouler sous la seule action de son poids.

Ainsi, selon un mode de réalisation de l'invention, ladite première étape est précédée d'une étape préliminaire de désagglomération du catalyseur, qui est de préférence réalisée en injectant dans le lit de catalyseur un gaz inerte sous pression tel que du dioxyde de carbone ou de l'azote.

La présente invention s'applique aux réacteurs qui sont pourvus d'au moins un tube de vidange, qui débouche dans le réacteur en partie basse du lit de particules ou en dessous de celui-ci.

Le tube de vidange peut être horizontal, ou incliné vers le bas. De préférence, il est incliné vers le bas. Dans ce cas, le tube de vidange présente de préférence un angle d'inclinaison par rapport à la verticale allant de 0 à 90 degrés, plus préférentiellement 20 à 70 degrés.

Au cours de la première étape du procédé selon l'invention une partie généralement substantielle du lit de catalyseur usé est extraite du réacteur, typiquement supérieure à 30% en poids du lit initial, et en général allant de 50 à 95% en poids du lit initial de catalyseur, plus particulièrement de 60 à 90% en poids du lit initial de catalyseur.

Le reliquat de catalyseur est ensuite éliminé complètement du réacteur au moyen de la seconde étape du procédé de l'invention.

Cette seconde étape met en œuvre un dispositif amovible comprenant un bras articulé portant une ou plusieurs protubérances disposées de manière spiralaire autour d'un axe rotatif, ou protubérances spiralaires rotatives. De manière avantageuse, la ou les protubérances spiralaires rotatives sont disposées à l'extrémité du bras articulé, qui est introduite dans le réacteur.

Lorsque l'axe est mis en rotation, la ou les protubérances spiralaires grattent les amas de catalyseur et assurent ainsi le décrochage des particules de catalyseur et leur expulsion vers l'ouverture du tube de vidange.

Ainsi, au cours de cette seconde étape le reliquat de catalyseur usé est totalement expulsé du réacteur via le tube de vidange.

La ou les protubérances peuvent être de formes et de dimensions variables dans un même dispositif. De même, le diamètre et le pas de la ou des spirales peuvent également varier dans un même dispositif.

L'axe rotatif autour duquel la ou les protubérances spiralaires sont disposées peut être matérialisé ou non.

Selon une première variante, l'axe rotatif n'est pas matérialisé, c'est-à-dire qu'il n'est pas constitué d'un élément matériellement visible tel que par exemple une pièce du dispositif. Dans ce cas, la ou les protubérances spiralaires s'enroulent autour d'un axe fictif (en ce sens qu'il n'est pas matériellement visible), et peuvent par exemple présenter une forme analogue à celle d'un tire-bouchon ou d'un ressort.

Selon une seconde variante, l'axe rotatif est matérialisé, c'est-à-dire visible dans le dispositif. Dans ce cas, il peut être réduit à une simple droite autour de laquelle s'enroulent la ou les protubérances spiralaires, ou être constitué d'une tige de diamètre plus ou moins important, autour de laquelle sont disposées la ou les protubérances spiralaires.

Selon un mode de réalisation préféré correspondant à cette seconde variante, le bras articulé comprend à son extrémité une tige rotative autour de laquelle sont disposées la ou les protubérances en forme de spirale.

Par « tige » on désigne de manière connue en soi une pièce de forme cylindrique. Selon l'invention, la tige est rotative, c'est-à-dire qu'elle tourne autour de son axe longitudinal.

La tige porte des protubérances en forme de spirale, c'est-à-dire que sa forme est, sur tout ou partie de sa longueur, analogue à celle d'une tige filetée.

Selon un mode de réalisation particulièrement préféré, ladite tige rotative portant la ou les protubérances en forme de spirale présente sous tout ou partie(s) de sa longueur la forme d'une vis sans fin.

Lorsque la tige porte plusieurs protubérances, celles-ci peuvent être accolées les unes aux autres ou espacées le long de la tige.

La spirale formée par l'enroulement d'une pluralité de protubérances peut être de forme continue ou discontinue.

La ou les protubérances ainsi que la tige le cas échéant peuvent être constituées de tout matériau approprié rigide, tels que par exemple et de manière non limitative des matériaux polymériques rigides, des matériaux métalliques (par exemple de l'acier), des composites et des mélanges de tels matériaux. Les protubérances peuvent être formées du même matériau que la tige, par exemple obtenues par filetage d'une tige classique, ou non.

Les formes et dimensions des protubérances, ainsi que celles de la tige le cas échéant (diamètre, longueur notamment), dépendent des dimensions du lit de catalyseur présent dans le réacteur à vidanger ainsi que du type de particules de catalyseur et de leur état plus ou moins aggloméré.

Selon la présente invention, la ou les protubérances disposées de manière spiralaire autour d'un axe rotatif sont présentes sur un bras articulé, de préférence à l'extrémité de celui-ci. Ce bras articulé est introduit dans le réacteur via le tube de vidange, ce qui permet de déplacer lesdites protubérances spiralaires rotatives dans toutes les directions possibles à l'intérieur du réacteur, de les positionner sur les amas de catalyseur, et le cas échéant d'ajuster leur position en faisant varier l'angle entre l'axe rotatif et le reste du bras articulé.

Le bras articulé permet ainsi d'introduire et de déplacer les protubérances spiralaires rotatives à l'intérieur du réacteur, et de les mettre au contact du catalyseur résiduel afin de le décrocher et l'extraire.

Selon un mode de réalisation avantageux, le bras articulé utilisé dans l'invention est télescopique, et notamment constitué d'une pluralité de modules qui sont assemblés, par exemple par emboitement, juste avant la mise en œuvre du procédé.

Le dispositif selon l'invention est amovible, et transportable. Pour la mise en œuvre de la seconde étape, le bras articulé est avantageusement fixé sur le tube de vidange.

Les déplacements et le positionnement des protubérances spiralaires rotatives à l'intérieur du réacteur peuvent être contrôlés par des moyens de guidage du bras articulé. Par moyen de guidage est entendu tout moyen permettant de bouger et positionner le bras articulé ; des moyens de guidage appropriés peuvent être par exemple constitués d'un ensemble de moteurs.

Ces moyens de guidage peuvent être pilotés de manière manuelle, automatique ou semi-automatique.

Le cas échéant, l'angle de l'articulation entre les protubérances spiralaires rotatives et le reste du bras articulé peut être piloté, ou laissé libre.

Lorsque le pilotage des moyens de guidage du bras articulé est manuel, un opérateur à l'extérieur du réacteur contrôle les déplacements du bras articulé à l'intérieur du réacteur en actionnant ces moyens de guidage.

Lorsque le pilotage des moyens de guidage du bras articulé est automatique, les moyens de guidage sont contrôlés par un ordinateur qui exécute un programme de déplacement du bras articulé à l'intérieur du réacteur. Le programme de déplacement peut être prédéfini, c'est-à-dire que les déplacements du bras articulé au cours de la seconde étape ont été calculés au préalable, de manière à optimiser l'évacuation du reliquat de catalyseur. Le programme de déplacement peut également être conçu de manière à organiser un déplacement aléatoire du bras articulé à l'intérieur du réacteur.

Le pilotage des moyens de guidage du bras articulé peut également être semi-automatique, c'est-à-dire contrôlé en partie via un programme d'ordinateur, et en partie par un opérateur.

De même, la vitesse de rotation des protubérances spiralaires peut être pilotée au moyen d'un moteur, de manière manuelle, automatique ou semi-automatique comme décrit ci-avant.

En outre, selon un mode de réalisation particulièrement avantageux de l'invention, des moyens de détection de la position de la ou des protubérances spiralaires rotatives sont présents dans le réacteur. De tels moyens permettent de connaître à tout moment la position exacte desdites protubérances dans le réacteur, et le cas échéant, d'optimiser leurs déplacements et leur vitesse de rotation.

Ces moyens de détection peuvent comprendre un logiciel de calcul, qui détermine au fur et à mesure la position des protubérances spiralaires rotatives dans le réacteur compte tenu des déplacements du bras articulé (simulation de la position des protubérances spiralaires rotatives via un logiciel compilant les données de pilotage pour en déduire la position).

D'autres moyens de détection incluent par exemple des systèmes de détection par niveau radar ou par niveau à ultrasons ; des systèmes mettant en œuvre un ou plusieurs accéléromètres, un ou plusieurs GPS ; des systèmes de vision par une ou plusieurs caméras.

Selon un mode de réalisation préféré, lesdits moyens de détection comprennent une ou plusieurs caméra(s), qui permet(tent) de visualiser à tout moment la position des protubérances spiralaires rotatives dans le réacteur. Une telle caméra peut être par exemple positionnée sur la paroi interne du réacteur et/ou sur le bras articulé. Divers types de caméras peuvent être employés à cet effet, incluant notamment des caméras à vision nocturne, des caméras infrarouges.

Une telle caméra peut en outre permettre si besoin de localiser les reliquats de catalyseur, et de piloter en conséquence les déplacements et la vitesse de rotation des protubérances spiralaires rotatives.

La vitesse de rotation de la ou des protubérances spiralaires rotatives peut être fixe ou variable. De préférence, elle est variable, ce qui permet de la faire varier au fur et à mesure de l'avancement de la deuxième étape. La vitesse de rotation peut également être ajustée compte tenu de la taille et de la configuration des agglomérats de catalyseur.

Les figures 5 et 6 illustrent la mise en œuvre de la seconde étape du procédé selon l'invention : le reliquat 3' de catalyseur est expulsé hors du réacteur 1 au moyen d'un dispositif amovible comprenant un bras articulé constitué d'une première branche 5 reliée par une articulation 10 à une tige 6 autour de laquelle des protubérances 8 en forme de spirale sont disposées.

La tige 6 est entrainée en rotation autour de son axe par un moteur 9. Sur les modes de réalisation des figures 5 et 6, ce moteur est directement porté par la tige 6, mais il peut parfaitement être positionné à un autre endroit, par exemple déporté sur d'autres éléments du dispositif.

L'ensemble de ce dispositif est introduit dans le réacteur 1 via le tube de vidange 2.

La branche 5 permet d'introduire la tige rotative 6 munie des protubérances spiralaires plus ou moins profondément dans le réacteur, et l'articulation 10 permet un déplacement de la tige rotative 6 dans toutes les directions possibles à l'intérieur du réacteur 1.

Selon un mode de réalisation non représenté, la branche 5 peut être elle-même articulée.

Les déplacements de la branche 5 sont assurés au moyen de l'unité de pilotage 11 positionnée à l'extérieur du réacteur 1, qui permet de contrôler les déplacements du dispositif dans le réacteur 1 de manière manuelle, automatique ou semi-automatique.

L'unité de pilotage 11 est reliée à la branche 5 par des éléments de transmission d'énergie et d'information (tels que par exemple flexibles hydrauliques, cables électriques etc.). Elle peut comprendre des moyens de guidage de différents types, par exemple motorisés, ou de préférence manuels. Elle peut permettre également de fournir l'énergie nécessaire pour assurer les déplacements du dispositif et alimenter le moteur 9. Ces moyens de guidage peuvent également permettre de contrôler l'articulation 10 de manière à contrôler les angles d'inclinaison de la tige rotative 6 par rapport à la branche 5. L'articulation 10 peut alternativement être laissée libre.

Les figures 7 à 12 illustrent différents modes de réalisation des protubérances 8 en forme de spirale.

La figure 7 illustre un mode de réalisation dans lequel la tige rotative 6 porte une unique protubérance 12 ayant la forme d'une spirale continue. Cette figure correspond à un mode de réalisation particulièrement préféré, dans lequel la tige rotative présente la forme d'une vis sans fin.

La figure 8 illustre une variante de la figure 7, dans laquelle la tige rotative 6 porte une pluralité de protubérances 13 accolées les unes aux autres, s'enroulant de manière continue, de manière à former une spirale continue autour de l'axe 6.

La figure 9 illustre une variante de la figure 8, dans laquelle les protubérances 14 s'enroulent de manière discontinue, de manière à former une spirale discontinue autour de l'axe 6.

La figure 10 illustre une autre variante de la figure 8, dans laquelle les protubérances 15 sont de dimensions variables.

La figure 11 illustre un mode de réalisation dans lequel les protubérances 16 accolées les unes aux autres, s'enroulent de manière continue autour d'un axe 6' visible mais réduit à une droite.

La figure 12 illustre une variante de la figure 11, dans laquelle les protubérances 17 sont de dimensions variables.

La figure 13 illustrent un autre mode de réalisation dans lequel une unique protubérance 18 ayant la forme d'une spirale continue s'enroule autour d'un axe 6" qui n'est pas matérialisé, et présente une forme analogue à celle d'un tire-bouchon ou d'un ressort.

Dans le cas où le réacteur comprend plusieurs lits de catalyseur, chaque lit peut être vidangé au moyen de la méthode selon l'invention. Cela nécessite la présence sur le réacteur d'au moins un tube de vidange au bas de chaque lit de catalyseur.

Lorsque le catalyseur usé à retirer du réacteur est réactif à l'air, par exemple lorsqu'il possède un caractère auto-échauffant, le procédé selon la présente invention est typiquement effectué en mettant puis en maintenant le réacteur sous gaz inerte, c'est-à-dire que le catalyseur qui est retiré du réacteur au cours des deux étapes selon l'invention est progressivement remplacé par un gaz inerte, tel que par exemple de l'azote. Cette introduction de gaz inerte dans le réacteur au fur et à mesure de la vidange de celui-ci, peut être effectuée par exemple par le haut ou par le bas du réacteur.

## Revendications

1. Procédé pour vidanger un réacteur (1) contenant au moins un lit (3) de particules de catalyseur usé et qui comprend au moins un tube de vidange (2), qui débouche dans le réacteur (1) en partie basse dudit lit (3) de particules ou en dessous de celui-ci, le procédé comprenant les étapes successives suivantes :
- une première étape consistant à provoquer l'écoulement hors du réacteur d'une partie du lit (3) de catalyseur via ledit tube de vidange (2) ; puis
- une seconde étape consistant à expulser hors du réacteur (1) le reliquat (3a, 3b, 3c, 3') de catalyseur en chassant vers l'ouverture du tube de vidange (2) les particules de catalyseur restant dans le réacteur à l'issue de la première étape, cette étape étant effectuée au moyen d'un dispositif amovible introduit dans le réacteur via le tube de vidange, **caractérisé en ce que** ledit dispositif amovible comprend un bras articulé portant une ou plusieurs protubérances (8) disposées de manière spiralaire autour d'un axe rotatif (6, 6', 6").

2. Procédé selon la revendication 1, **caractérisé en ce que** la première étape est effectuée de manière gravitaire, en provoquant l'écoulement gravitaire hors du réacteur d'une partie du lit (3) de catalyseur via ledit tube de vidange (2).

3. Procédé selon l'une quelconque des revendications précédentes, caractérisé en que la ou les protubérances (8) disposées de manière spiralaire autour de l'axe rotatif (6, 6', 6") sont présentes à l'extrémité du bras articulé.

4. Procédé selon l'une quelconque des revendications précédentes, caractérisé en que l'axe rotatif est matérialisé (6, 6').

5. Procédé selon la revendication précédente, **caractérisé en ce que** le bras articulé comprend à son extrémité une tige rotative (6) autour de laquelle sont disposées la ou les protubérances en forme de spirale (12, 13, 14, 15).

6. Procédé selon la revendication précédente, **caractérisé en ce que** ladite tige rotative (6) portant la ou les protubérances en forme de spirale (12) présente sous tout ou partie(s) de sa longueur la forme d'une vis sans fin.

7. Procédé selon l'une quelconque des revendications 4 à 6, **caractérisé en ce que** la tige porte plusieurs protubérances accolées les unes aux autres ou espacées le long de la tige.

8. Procédé selon l'une quelconque des revendications précédentes, **caractérisé en ce que** le dispositif comprend une pluralité de protubérances, dont l'enroulement forme une spirale de forme continue ou discontinue.

9. Procédé selon l'une quelconque des revendications 1 à 3, caractérisé en que ce l'axe rotatif (6") n'est pas matérialisé, la ou les protubérances (18) présentant de préférence une forme analogue à celle d'un tire-bouchon ou d'un ressort.

10. Procédé selon l'une quelconque des revendications précédentes, **caractérisé en ce qu'**au cours de la seconde étape les déplacements et le positionnement des protubérances spiralaires rotatives (8) l'intérieur du réacteur (1) sont contrôlés par des moyens de guidage du bras articulé, pilotés de manière manuelle, automatique ou semi-automatique.

11. Procédé selon l'une quelconque des revendications précédentes, **caractérisé en ce que** le bras articulé est télescopique, et notamment constitué d'une pluralité de modules qui sont assemblés juste avant la mise en œuvre du procédé.

12. Procédé selon l'une quelconque des revendications précédentes, **caractérisé en ce que** des moyens de détection de la position de ladite ou desdites protubérances sont présents dans le réacteur.

13. Procédé selon la revendication précédente, **caractérisé en ce que** lesdits moyens de détection comprennent une ou plusieurs caméra(s), positionnée(s) sur la paroi interne du réacteur (1) et/ou sur le bras articulé.

14. Procédé selon l'une quelconque des revendications précédentes, **caractérisé en ce que** le tube de vidange (2) est horizontal ou incliné vers le bas, avec un angle d'inclinaison par rapport à la verticale allant préférentiellement de 0 à 90 degrés, plus préférentiellement 20 à 70 degrés.

15. Procédé selon l'une quelconque des revendications précédentes, **caractérisé en ce que** ladite première étape est précédée d'une étape préliminaire de désagglomération du catalyseur, réalisée en injectant dans le lit de catalyseur (3) un gaz inerte sous pression tel que du dioxyde de carbone ou de l'azote.

## Patentansprüche

1. Verfahren zur Entleerung eines Reaktors (1), der mindestens ein Teilchenbett (3) eines verbrauchten Katalysators enthält, und der mindestens ein Entleerungsrohr (2) umfasst, das im unteren Teil des Teilchenbetts (3) oder unterhalb desselben in den Reaktor (1) einmündet, und die folgenden aufeinanderfolgenden Schritte umfassend:
- einen ersten Schritt, der darin besteht, die Strömung eines Teils des Bettes (3) des Katalysators über das Entleerungsrohr (2) aus dem Reaktor herbeizuführen; danach
- einen zweiten Schritt, der darin besteht, den Überrest (3a, 3b, 3c, 3') des Katalysators aus dem Reaktor (1) auszustoßen, indem man die Teilchen des Katalysators, die am Ende des ersten Schrittes in dem Reaktor verbleiben, zur Öffnung des Entleerungsrohres (2) treibt, wobei dieser Schritt anhand einer abnehmbaren Vorrichtung ausgeführt wird, die über das Entleerungsrohr in den Reaktor eingeführt wird,
**dadurch gekennzeichnet, dass** die abnehmbare Vorrichtung einen Gelenkarm umfasst, der einen oder mehrere Fortsätze (8) trägt, die spiralförmig um eine Drehachse (6, 6', 6") herum angeordnet sind.

2. Verfahren nach Anspruch 1, **dadurch gekennzeichnet, dass** der erste Schritt im Freigefälle ausgeführt wird, und dabei die Freigefälleströmung eines Teils des Bettes (3) des Katalysators über das Entleerungsrohr (2) aus dem Reaktor heraus herbeigeführt wird.

3. Verfahren nach einem der vorstehenden Ansprüche, **dadurch gekennzeichnet, dass** der oder die Fortsätze (8), die spiralförmig um die Drehachse (6, 6', 6") herum angeordnet sind, am Ende des Gelenkarmes vorhanden sind.

4. Verfahren nach einem der vorstehenden Ansprüche, **dadurch gekennzeichnet, dass** die Drehachse (6, 6) materialisiert ist.

5. Verfahren nach dem vorstehenden Anspruch, **dadurch gekennzeichnet, dass** der Gelenkarm an seinem Ende einen Drehstift (6) umfasst, um den herum der oder die Fortsätze in Spiralform (12, 13, 14, 15) angeordnet sind.

6. Verfahren nach dem vorstehenden Anspruch, **dadurch gekennzeichnet, dass** der Drehstift (6), der den oder die Fortsätze in Spiralform (12) trägt, unter seiner gesamten Länge oder einem Teil(en) davon die Form einer Endlosschnecke aufweist.

7. Verfahren nach einem der Ansprüche 4 bis 6, **dadurch gekennzeichnet, dass** der Stift mehrere Fortsätze trägt, die aneinandergefügt oder entlang des Stiftes beabstandet sind.

8. Verfahren nach einem der vorstehenden Ansprüche, **dadurch gekennzeichnet, dass** die Vorrichtung eine Vielzahl von Fortsätzen umfasst, deren Wicklung eine Spirale in durchgehender oder unterbrochener Form bildet.

9. Verfahren nach einem der Ansprüche 1 bis 3, **dadurch gekennzeichnet, dass** die Drehachse (6) nicht materialisiert ist, wobei der oder die Fortsätze (18) vorzugsweise eine Form entsprechend jener eines Korkenziehers oder einer Feder aufweisen.

10. Verfahren nach einem der vorstehenden Ansprüche, **dadurch gekennzeichnet, dass** die Verschiebungen und die Positionierung der drehbaren spiralförmigen Fortsätze (8) im Inneren des Reaktors (1) im Laufe des zweiten Schrittes durch Mittel zum Führen des Gelenkarmes gesteuert werden, die von Hand, automatisch oder halbautomatisch gelenkt werden.

11. Verfahren nach einem der vorstehenden Ansprüche, **dadurch gekennzeichnet, dass** der Gelenkarm teleskopisch ist und insbesondere aus einer Vielzahl von Modulen besteht, die unmittelbar vor der Ausführung des Verfahrens zusammengesetzt werden.

12. Verfahren nach einem der vorstehenden Ansprüche, **dadurch gekennzeichnet, dass** Mittel zum Erkennen der Position des oder der Fortsätze in dem Reaktor vorhanden sind.

13. Verfahren nach dem vorstehenden Anspruch, **dadurch gekennzeichnet, dass** die Mittel zum Erkennen eine oder mehrere Kamera(s) umfassen, die an der Innenwand des Reaktors (1) und/oder an dem Gelenkarm positioniert ist (sind).

14. Verfahren nach einem der vorstehenden Ansprüche, **dadurch gekennzeichnet, dass** das Entleerungsrohr (2) horizontal, oder mit einem Neigungswinkel in Bezug auf die Vertikale, der vorzugsweise von 0 bis 90 Grad, bevorzugter von 20 bis 70 Grad reicht, nach unten geneigt ist.

15. Verfahren nach einem der vorstehenden Ansprüche, **dadurch gekennzeichnet, dass** dem ersten Schritt ein Vorbereitungsschritt zum Desagglomerieren des Katalysators vorangeht, der durch Einspritzen eines Inertgases unter Druck, wie Kohlendioxyd oder Stickstoff, in das Katalysatorbett (3) umgesetzt wird.

## Claims

1. Method for emptying a reactor (1) containing at least one bed (3) of spent catalyst particles and that comprises at least one dump tube (2), which opens into the reactor (1) in the bottom portion of said bed (3) of particles or underneath the latter, the method comprising the following successive steps:
- a first step of causing a proportion of the catalyst bed (3) to flow out of the reactor via said dump tube (2); then
- a second step of expelling out of the reactor (1) the catalyst remainder (3a, 3b, 3c, 3') by driving towards the opening of the dump tube (2) the catalyst particles remaining in the reactor at the end of the first step, this step being performed by means of a removable device introduced into the reactor via the dump tube,
**characterised in that** said removable device comprises an articulated arm bearing one or more protuberances (8) spirally disposed about a rotary axis (6, 6', 6").

2. Method according to claim 1, **characterised in that** the first step is performed under gravity, by causing a proportion of the catalyst bed (3) to flow under gravity out of the reactor via said dump tube (2).

3. Method according to any one of the preceding claims, **characterised in that** the protuberance or protuberances (8) spirally disposed about the rotary axis (6, 6', 6") are present at the end of the articulated arm.

4. Method according to any one of the preceding claims, **characterised in that** the rotary axis is materialised (6, 6').

5. Method according to the preceding claim, **characterised in that** the articulated arm comprises at its end a rotary rod (6) about which are disposed the spiral-shaped protuberance or protuberances (12, 13, 14, 15).

6. Method according to the preceding claim, **characterised in that** said rotary rod (6) bearing the spiral-shaped protuberance or protuberances (12) has along all or part(s) of its length the shape of an auger.

7. Method according to any one of claims 4 to 6, **characterised in that** the rod bears a plurality of protuberances joined to one another or spaced along the rod.

8. Method according to any one of the preceding claims, **characterised in that** the device comprises a plurality of protuberances, of which the winding forms a spiral of continuous or discontinuous shape.

9. Method according to any one of claims 1 to 3, **characterised in that** the rotary axis (6") is not materialised, the protuberance or protuberances (18) preferably having a shape similar to that of a corkscrew or of a spring.

10. Method according to any one of the preceding claims, **characterised in that** in the course of the second step the movements and the positioning of the rotary spiral protuberances (8) inside the reactor (1) are controlled by means of guidance of the articulated arm, controlled manually, automatically or semi-automatically.

11. Method according to any one of the preceding claims, **characterised in that** the articulated arm is telescopic, and particularly consists of a plurality of modules that are assembled just before the implementation of the method.

12. Method according to any one of the preceding claims, **characterised in that** means for detecting the position of said protuberance or protuberances are present in the reactor.

13. Method according to the preceding claim, **characterised in that** said detection means comprise one or more camera(s), positioned on the inner wall of the reactor (1) and/or on the articulated arm.

14. Method according to any one of the preceding claims, **characterised in that** the dump tube (2) is horizontal or inclined downwards, with an angle of inclination in relation to the vertical preferably ranging from 0 to 90 degrees, more preferably 20 to 70 degrees.

15. Method according to any one of the preceding claims, **characterised in that** said first step is preceded by a preliminary step of deagglomerating the catalyst, achieved by injecting a pressurised inert gas such as carbon dioxide or nitrogen into the catalyst bed (3).
